(19) Europäisches Patentamt
European Patent Office
Office européen des brevets

(11) **EP 2 239 965 A1**

(12) **EUROPEAN PATENT APPLICATION**
published in accordance with Art. 153(4) EPC

(43) Date of publication:
**13.10.2010 Bulletin 2010/41**

(51) Int Cl.:
*H04S 1/00* (2006.01)      *H04N 5/60* (2006.01)
*H04R 5/02* (2006.01)

(21) Application number: **08870769.0**

(22) Date of filing: **17.12.2008**

(86) International application number:
**PCT/JP2008/072913**

(87) International publication number:
**WO 2009/090822 (23.07.2009 Gazette 2009/30)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.01.2008   JP 2008006215**

(71) Applicant: **Sharp Kabushiki Kaisha**
**Osaka-shi, Osaka 545-8522 (JP)**

(72) Inventor: **KUBO, Katsutoshi**
**Osaka-shi, Osaka 545-8522 (JP)**

(74) Representative: **Müller - Hoffmann & Partner**
**Patentanwälte**
**Innere Wiener Strasse 17**
**81667 München (DE)**

(54) **AUDIO SIGNAL PROCESSING DEVICE, AUDIO SIGNAL PROCESSING METHOD, DISPLAY DEVICE, RACK, PROGRAM, AND RECORDING MEDIUM**

(57)    A sound signal processing apparatus (100) includes: an equalizer (110L) for enhancing an 8kHz band of a sound signal (#1L); an equalizer (110R) for enhancing an 8kHz band of a sound signal (#1R); and a filter (120) for delaying a phase of a sound signal (#2L). The filter (120) decreases correlation between the sound signals (#3L) and (#2R). This sufficiently moves a sound image upward, without use of a technique of pseudo surround.

F I G.  1

**Description**

Technical Field

The present invention relates to a sound signal processing apparatus for processing a stereo sound signal and to a sound signal processing method for processing a stereo sound signal. In addition, the present invention relates to a display apparatus having the sound signal processing apparatus and to a rack having the sound signal processing apparatus. Furthermore, the present invention relates to a program for causing a digital signal processor to operate as the sound signal processing apparatus and to a storage medium storing the program.

Background Art

Television receivers (hereinafter, referred to as "TV") are usually configured to be stereo-capable, thereby being compatible with stereo broadcast. Such televisions have a pair of speakers for outputting stereo sound associated with a video image to be displayed. Such speakers are classified into a side-speaker type and an under-speaker type, depending on their layouts. The side-speaker type refers to a layout in which a pair of speakers is provided on both sides of a display panel, respectively. The under-speaker type refers to a layout in which a pair of speakers is provided under a display panel. In the present Description, "sound" is not limited to a human voice but generally refers to sounds.

In a case where two speakers output a same sound, a listener perceives the sound as if a sound source lies at a midpoint between the two speakers (hereinafter, an image of a sound source perceived by a listener is referred to as "sound image"). Therefore, there is no need to provide a speaker on each of both sides of a display panel of a TV of the under-speaker type. This leads to a merit of space saving. On the other hand, the TV of the under-speaker type has a demerit in that a video image displayed on the display panel does not positionally match a sound image because the sound image is localized under the display panel. The demerit cannot be overlooked in view of a recent trend in upsizing of display panels.

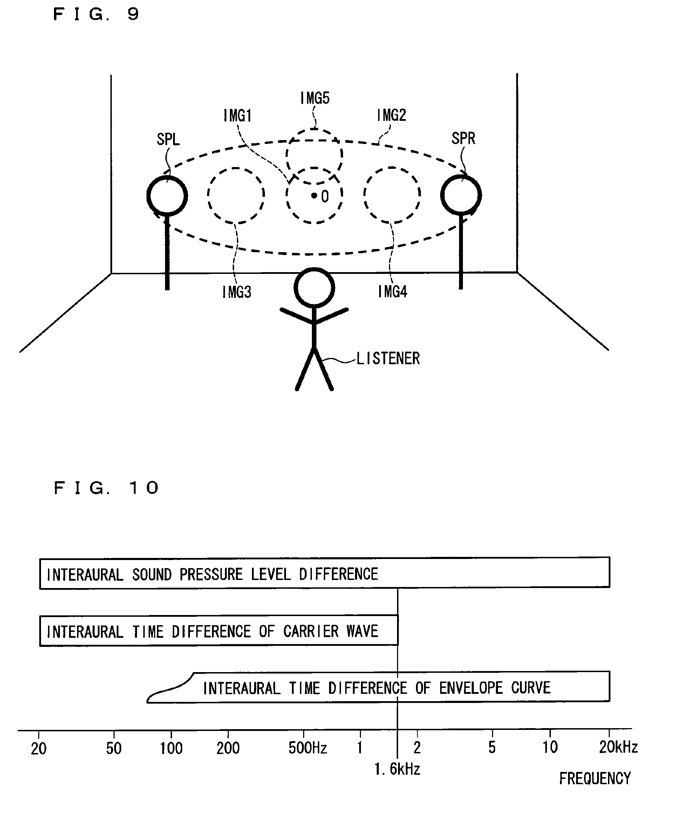

The following describes, in more detail, the sound image that the listener perceives due to sound waves emitted from the two speakers, with reference to Figs. 9 through 12.

Fig. 9 is a view illustrating sound images that the listener perceives due to sound waves emitted from two speakers. In Fig. 9, SPL indicates a speaker which is provided in front of the listener on the left and is driven by a sound signal L for a left channel while SPR indicates a speaker which is provided in front of the listener on the right and is driven by a sound signal R for a right channel. IMG1 through IMG5 indicate the sound images which are perceived by the listener. The listener is assumed to be at one vertex of a regular triangle whose other two vertexes indicate the speakers SPL and SPR.

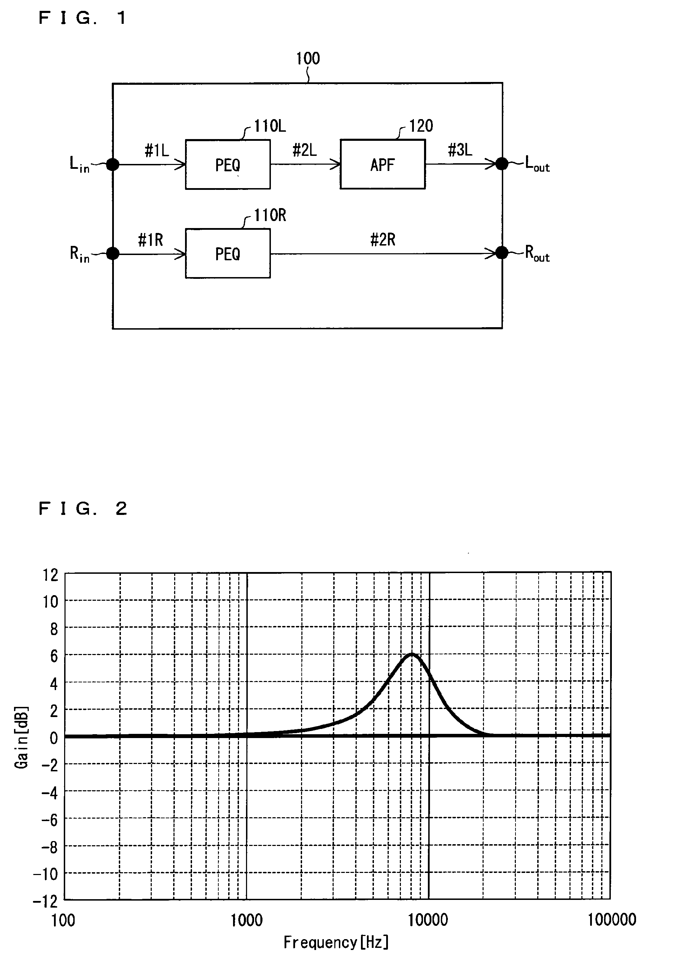

A size of a sound image to be perceived by the listener is determined by correlation between the sound signals L and R (see P. 127 of Non-patent Literature 1). For example, in a case where the sound signals L and R are identical (i.e., correlation is 1), the listener perceives the sound image IMG1 concentrated at a midpoint O between the speakers SPL and SPR, as illustrated in Fig. 1. By contrast, in a case where the correlation between the sound signals L and R is 0, the listener perceives the sound image IMG2 diffused between the speakers SPL and SPR.

In the case of continuous time, correlation Φ between the sound signals L and R is defined by the following formula (1) (see P. 127 of Non-patent Literature 1). In the case of discrete time, the correlation Φ is defined by the following formula (2) (see P. 50 of Non-patent Literature 2).

[Formula 1]

$$\Phi(\tau) = \lim_{T \to \infty} \frac{\frac{1}{2T}\int_{-T}^{T} L(t)R(t+\tau)dt}{\frac{1}{2T}\sqrt{\int_{-T}^{T} L^2(t)dt \int_{-T}^{T} R^2(t)dt}} \qquad \ldots (1)$$

[Formula 2]

$$\Phi(m) = \frac{\sum_{n=0}^{N-1} L(n)R(m+n)}{N\sqrt{\dfrac{1}{N}\sum_{n=0}^{N-1}(L(n)-<L>)^2}\sqrt{\dfrac{1}{N}\sum_{n=0}^{N-1}(R(n)-<R>)^2}} \quad \dots(2)$$

L(t) is a value of the sound signal L at time t. R(t) is a value of the sound signal R at time t. L(m) is a value of the sound signal L at discrete time m. R(m) is a value of the sound signal R at discrete time m. <L> and <R> are respective average values of the sound signals L and R. N is the number of samples taken in order to find a cross-correlation value.

By causing a phase difference and a level difference between the sound signals L and R, it is possible to move, in an azimuth direction, a sound image to be perceived by the listener. For example, in a case where a phase of the sound signal L is advanced so that a level thereof is increased, the listener perceives that the sound image IMG3 is located on the left of the midpoint O between the speakers SPL and SPR, as illustrated in Fig. 1. By contrast, in a case where a phase of the sound signal R is advanced so that a level thereof is increased, the listener perceives that the sound image IMG4 is located on the right of the midpoint O between the speakers SPL and SPR.

However, sound images can be moved by causing a phase difference only in a case where sound signals have frequencies of 1.6kHz or lower. This is because, as shown in Fig. 10, an interaural time difference (i.e., a time lag between a time when a sound wave reaches a tympanic membrane of a left ear and a time when the sound wave reaches a tympanic membrane of a right ear) affects perception of a sound image only in a bandwidth of 1.6kHz or lower (This is based on P. 73 of Non-patent Literature 1). An interaural sound pressure level difference (a difference between levels of sound pressures on tympanic membranes of both ears) affects the perception of a sound image across an audible bandwidth (from 20Hz to 20kHz).

In addition, by enhancing specific bandwidths of the sound signals L and R, it is possible to move, in an elevation direction, a sound image to be perceived by the listener. For example, by enhancing 8kHz bands of the sound signals L and R, the listener perceives that the sound image IMG5 is located above the midpoint O between the speakers SPL and SPR, as illustrated in Fig. 1. It is considered that such movement of a sound image in an elevation direction by enhancement of a specific bandwidth is brought about by a learning effect of a brain.

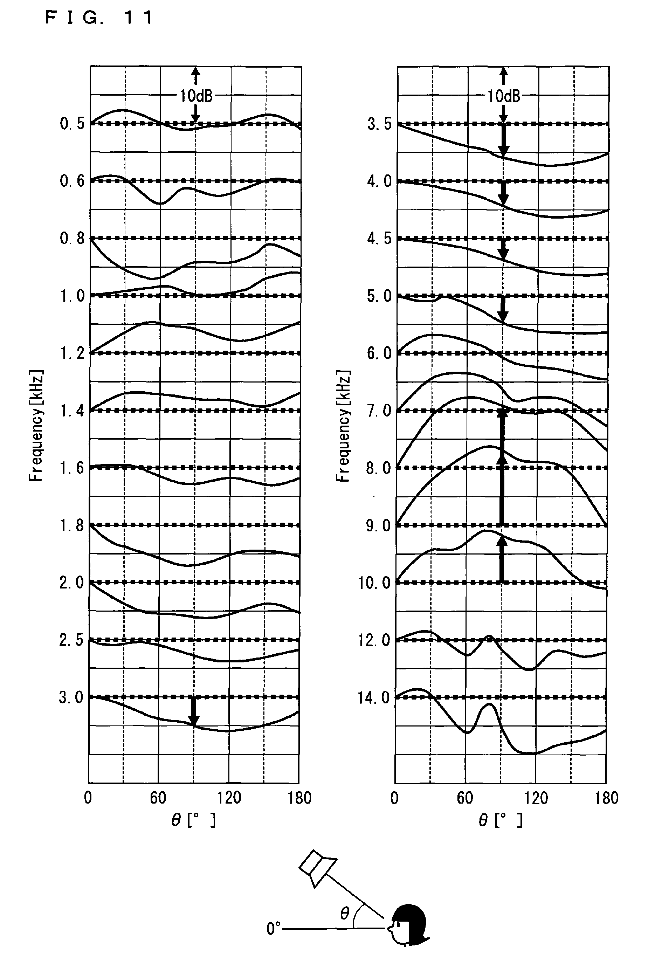

Fig. 11 shows a graph of a head-related transfer function (on the basis of P. 18 of Non-patent Literature 3). In the graph, a change in sound pressure level (i.e., a sound pressure level which reaches a tympanic membrane via a head region, an outer ear, and an inner ear) is plotted for every frequency. The change is caused by moving a sound source in an elevation direction in a median plane. As shown in Fig. 11, in a range from 7kHz to 10kHz, a sound pressure level in the case of θ=90° (i.e., in a case where the sound source is positioned right above the listener) is higher than a sound pressure level in the case of θ=0° (i.e., in a case where the sound source is positioned right in front of the listener). Since the listener knows, by learning, this characteristic of the head-related transfer function, he has an illusion that the sound source of a sound wave having an enhanced 8kHz band lies above an actual position of the sound source.

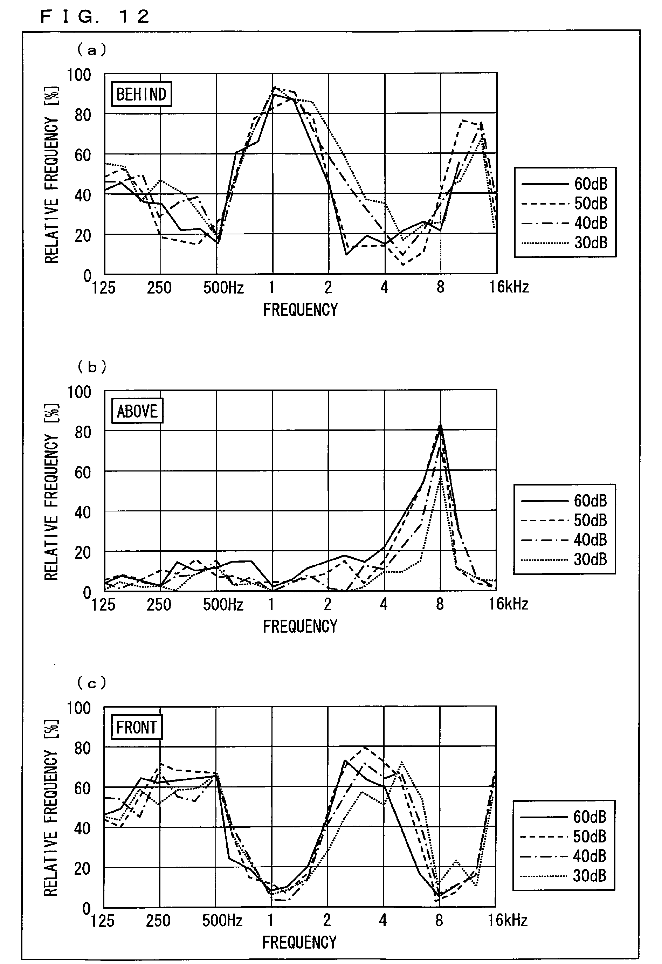

Fig. 12 shows an experimental result demonstrating this (on the basis of P. 97 of Non-patent Literature 1). Experiments were conducted in such a manner that a 1/3-octave-band sound signal was presented to a plurality of test subjects, and each test subject was questioned about at which one of the following positions: in front of the test subject, above the test subject, and behind the test subject he feels that the sound source is positioned. (a) of Fig. 12 shows relative frequencies of test subjects who answered that the sound source was positioned behind the test subjects. (b) of Fig. 12 shows relative frequencies of test subjects who answered that the sound source was positioned above the test subjects. (c) of Fig. 12 shows relative frequencies of test subjects who answered that the sound source was positioned in front of the test subjects. (b) of Fig. 12 shows that in a case where a sound signal whose center frequency is 8kHz is presented to a test subject, the test subject is likely to have an illusion that the sound source is positioned above him.

Patent Literatures 1 and 2, etc. disclose techniques for moving a sound image upward by enhancing a specific bandwidth.

Patent Literature 1 discloses an acoustic device having: an attenuator which attenuates a received sound signal and which is capable of varying an attenuation amount; a low-pass filter which processes an attenuated sound signal; and a differential amplifier which outputs a sound signal in accordance with a difference between the received sound signal and a sound signal passed through the low-pass filter. The acoustic device is arranged to allow adjustment of an attenuation amount of the attenuator. The acoustic device is a device for moving a sound image upward by relatively enhancing a bandwidth higher than a bandwidth blocked by the low-pass filter. However, a sufficient distance of upward movement of a sound image cannot be obtained only by thus enhancing a specific bandwidth. In particular, in a case where this technique is applied to a TV of the under-speaker type, a sound image cannot be moved upward so as to positionally match a video image displayed on a display panel.

Patent Literature 2 discloses a sound image upward expansion circuit realized by using, in combination, enhancement of a specific bandwidth and a technique of pseudo surround. The sound image upward expansion circuit has: a midrange correction filter circuit which processes a sum signal of a left channel sound signal and a right channel sound signal; a CR filter which processes a difference signal of the left channel sound signal and the right channel sound signal; a phase delay device which delays a phase of a sound signal passed through the CR filter; a mixer which generates a left channel output signal by mixing the left channel sound signal, a signal outputted from the midrange correction filter, and a signal outputted from the phase delay device; and a mixer which generates a right channel output signal by mixing the right channel sound signal, the signal outputted from the midrange correction filter, and the signal outputted from the phase delay device. The sound upward expansion circuit makes it possible to obtain a sufficient distance of upward movement of a sound image, due to a combination of (i) an effect of upward movement of a sound image by enhancement of a specific bandwidth and (ii) an effect of diffusion of the sound image by the pseudo surround technique.

Citation List

Non-patent Literature 1
"Spatial Acoustics" written by Jens Blauert, written and edited by Masayuki MORIMOTO and Toshiyuki GOTO, Kagoshima Institute Publishing Co., Ltd., July 10, 1986
Non-patent Literature 2
"Introduction to Digital Signal Processing," written by Kenichi KIDO, Maruzen Co., Ltd., July 20, 1985
Non-patent Literature 3
Spatial Acoustics (Lecture materials for 11th to 12th weeks of D302 Auditory Sense and Acoustic Processing (2007)), [online], Acoustic Information Laboratory, The University of Electro-Communications, [Searched on December 12, 2007], Internet <URL: http://www. sound. sie. dendai.ac. jp/stereo_theory.pd f>
Patent Literature 1
Japanese Patent Application Publication, Tokukai, No. 2002-10400 A (Publication Date: January 11, 2002)
Patent Literature 2
Japanese Patent Application Publication, Tokukai, No. 2006-42316 A (Publication Date: February 9, 2006)

Summary of Invention

However, according to the technique disclosed in Patent Literature 2, the sound signal of the left channel is outputted also from the right speaker after a phase of the sound signal is delayed, and the sound signal of the right channel is outputted from the left speaker after a phase of the sound signal is delayed. This leads to the following problems.

That is, sound quality deterioration such as a change in tone is inevitable for the technique disclosed in Patent Literature 2. This is because the technique utilizes a sum signal and a difference signal of the left channel sound signal and the right channel sound signal in order to move a sound image upward.

In addition, in a case where the technique is applied to a TV of the under-speaker type, a sound image is localized outside a display panel. This leads to a problem in that the sound image does not positionally match a video image displayed on the display panel. This is because a sound image of a sound contained only in the left channel is localized further left of the left speaker while a sound image of a sound contained only in the right channel is localized further right of the right speaker.

Furthermore, in a case where a listener moves to the right (or the left) from one vertex of an isosceles triangle whose base angles are formed at the positions of the two speakers, the sound image localization is disrupted. This is because in a case where the listener moves to the right, the sound image of the sound contained only in the left channel, the sound image of the sound contained only in the right channel, and a sound image of a common sound contained in both channels are all localized in the vicinity of the right (or left) speaker.

The present invention was made in view of the problems. An object of the present invention is to provide a sound signal processing apparatus capable of sufficiently moving upward, without causing such problems, a sound image to be perceived by a listener.

In order to attain the object, a sound signal processing apparatus of the present invention is a sound signal processing apparatus for processing a stereo sound signal containing a first sound signal and a second sound signal, the sound signal processing apparatus including: a first equalizer for enhancing a bandwidth covering a frequency of 8kHz of the first sound signal; a second equalizer for enhancing a bandwidth covering the frequency of 8kHz of the second sound signal; and a filter for delaying a phase of the first sound signal outputted from the first equalizer, or a phase of the first sound signal to be inputted in the first equalizer.

The arrangement enhances respective bandwidths covering 8kHz of the first sound signal and the second sound signal. Therefore, in a case where the first sound signal and the second sound signal contain a common monaural sound, a listener is more likely to perceive that a sound image of the monaural sound is located above a midpoint between paired speakers which are driven according to the first sound signal and the second sound signal. In addition, the phase of the first sound signal is delayed according to the arrangement. This decreases correlation between the monaural sound contained in the first sound signal and that of the second sound signal. As a result, the sound image of the monaural sound is diffused more than a sound image obtained by merely enhancing the bandwidths covering 8kHz. Furthermore, the use of the first equalizer and the second equalizer results in that the correlation between the first and second signals is decreased in a greater proportions of the first and second signals, as compared to a case where the phase of the first sound signal is merely delayed (i.e., a case where the first equalizer and the second equalizer are not provided). A synergistic effect brought about by these causes further diffusion of the sound image. This makes it possible to obtain a sufficient distance of upward movement of the sound image.

Furthermore, according to the arrangement, the first sound signal and the second sound signal are processed independently. Accordingly, a sound contained in the first sound signal is not mixed in the second sound signal, and vice versa. This eliminates sound quality deterioration such as a change in tone, and that disruption of sound image localization which is due to right-and-left movement of a listener. This also prevents a sound image from being localized outside a range between two right and left speakers provided under a display panel, in a case where the arrangement is applied to a TV of the under-speaker type, a TV rack housing speakers, etc.

The first equalizer and the second equalizer can be ones of any kind, provided that they can enhance a bandwidth covering 8kHz. For example, the first equalizer and the second equalizer can be amplification-type ones which selectively amplify a frequency component in the bandwidth. Alternatively, the first equalizer and the second equalizer can be attenuation-type ones which selectively attenuate a frequency component outside the bandwidth.

The sound signal processing apparatus of the present invention is preferably arranged such that the filter maintains an amplitude of the first sound signal across an audible bandwidth.

According to the arrangement, the first sound signal and the second sound signal which are to be outputted from the sound signal processing apparatus have a same level, provided that the first sound signal and the second sound signal both inputted in the sound signal processing apparatus have a same level. This makes it possible to sufficiently move a sound image upward in an elevation direction, without causing both a change in tone and movement of the sound image in an azimuth direction due to an interaural sound pressure level difference.

The sound signal processing apparatus of the present invention is preferably arranged such that the filter has a frequency characteristic such that a phase delay amount shows a monotonous reduction against a frequency reduction.

According to the arrangement, in the 8kHz band, it is possible to obtain a sufficient phase delay amount for diffusing a sound image. In addition, it is possible to suppress a phase delay amount small in a bandwidth in which an interaural time difference affects perception of a sound image (i.e., in a bandwidth not higher than 1.6kHz). This makes it possible to sufficiently move a sound image upward in an elevation direction, without causing movement of the sound image in an azimuth direction due to an interaural time difference.

In order to attain the object, a sound signal processing method of the present invention is a sound signal processing method for processing a stereo sound signal containing a first sound signal and a second sound signal, the sound signal processing method including: a first equalizing step of enhancing a bandwidth covering 8kHz of the first sound signal; a second equalizing step of enhancing a bandwidth covering 8kHz of the second sound signal; and a filtering step of delaying a phase of the first sound signal processed in the first equalizing step, or a phase of the first sound signal to be processed in the first equalizing step.

The arrangement makes it possible to obtain a sufficient distance of upward movement of a sound image, as is the case with the sound signal processing apparatus. In addition, this eliminates (i) sound quality deterioration such as a change in tone due to addition or subtraction between the first sound signal and the second sound signal, and (ii) that disruption of sound image localization which is due to right-and-left movement of a listener. Furthermore, this prevents a sound image from localizing outside a range between two right and left speakers provided under a display panel in a case where the sound signal processing apparatus is applied to a TV of the under-speaker type or a TV rack housing speakers.

The present invention encompasses a display apparatus including the sound signal processing apparatus, and a rack including the same.

That is, the display apparatus of the present invention is a display apparatus having a display panel for displaying a video image, and a pair of speakers provided under the display panel, the pair of speakers for outputting stereo sound associated with the video image, the display apparatus including the sound signal processing apparatus, the display apparatus supplying, to the pair of speakers, the stereo sound signal processed by the sound signal processing apparatus.

The rack of the present invention is a rack for placing a display apparatus for displaying a video image, the rack having a pair of speakers for outputting stereo sound associated with the video image, the rack including the sound signal processing apparatus, the rack supplying, to the pair of speakers, the stereo sound signal processed by the sound signal processing apparatus.

The sound signal processing apparatus can be realized as a digital signal processor. In this case, the present invention encompasses a storage medium storing (i) a sound signal processing program which causes the digital signal processor to operate as respective means (equalizers and filter), thereby causing the digital signal processor to operate as the sound signal processing apparatus, and (ii) a storage medium storing the sound signal processing program.

For a fuller understanding of the nature and advantages of the invention, reference should be made to the ensuing detailed description taken in conjunction with the accompanying drawings.

Brief Description of Drawings

Fig. 1
Fig. 1 is a block diagram illustrating an arrangement of a sound signal processing circuit of a first embodiment of the present invention.
Fig. 2
Fig. 2 is a graph for the first embodiment which graph shows an amplification characteristic of a parametric equalizer.
Fig. 3

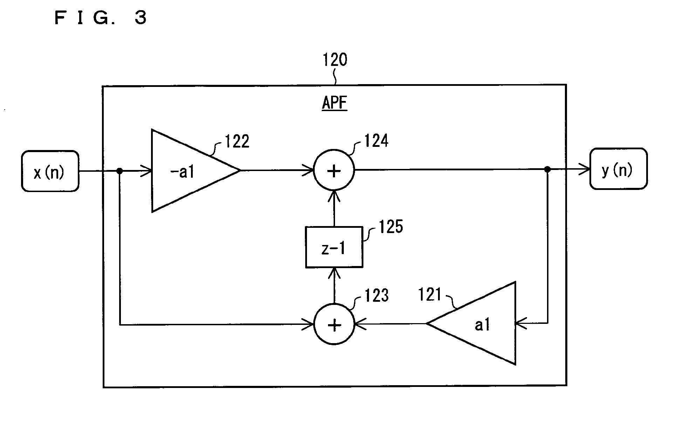

Fig. 3 is a block diagram illustrating an arrangement example of an all-pass filter of the first embodiment.
Fig. 4

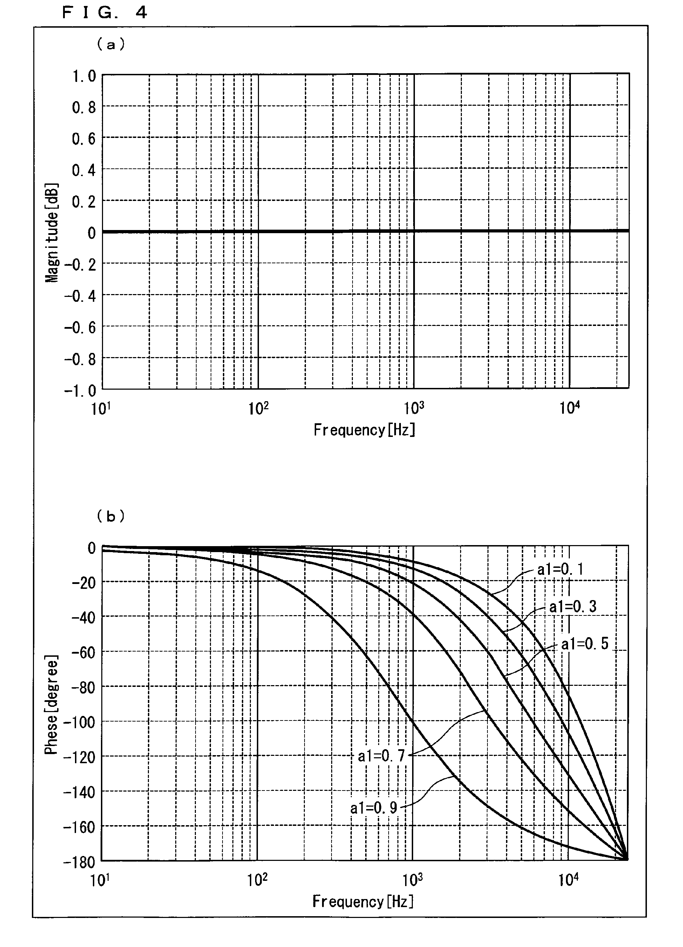

Fig. 4 shows graphs for the first embodiment which graphs show filter characteristics of the all-pass filter. (a) of Fig. 4 shows a frequency characteristic of a gain of the all-pass filter. (b) of Fig. 4 shows a frequency characteristic of a phase delay amount of the all-pass filter.
Fig. 5

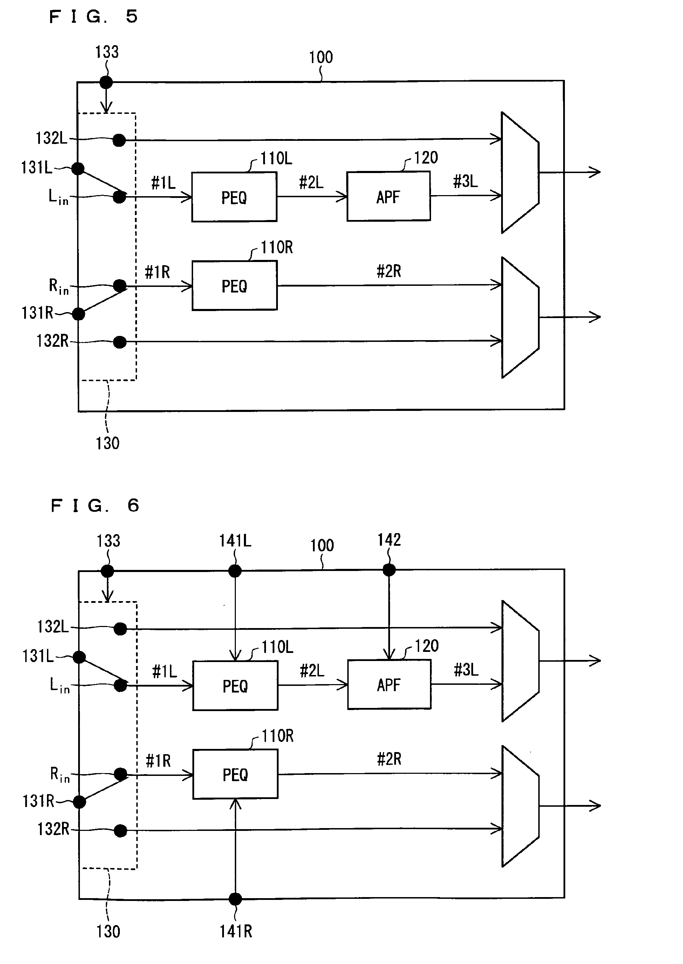

Fig. 5 is a block diagram illustrating an arrangement of a sound signal processing circuit of a modification example of the first embodiment.
Fig. 6
Fig. 6 is a block diagram illustrating an arrangement of a sound signal processing circuit of another modification example of the first embodiment.
Fig. 7

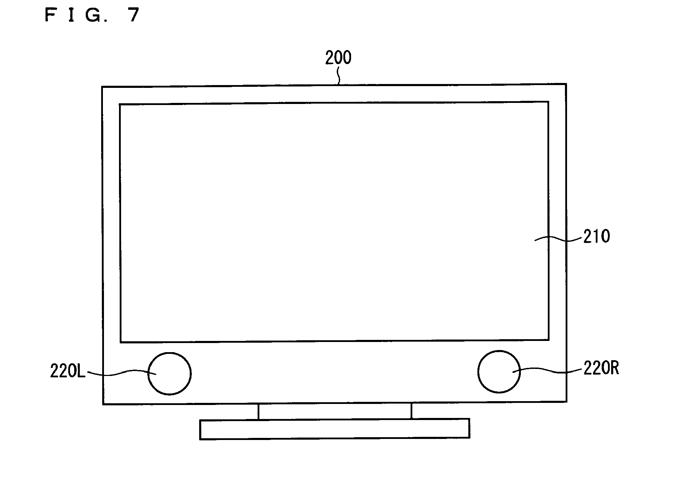

Fig. 7 is an elevation view illustrating an arrangement of a TV of a second embodiment of the present invention.
Fig. 8

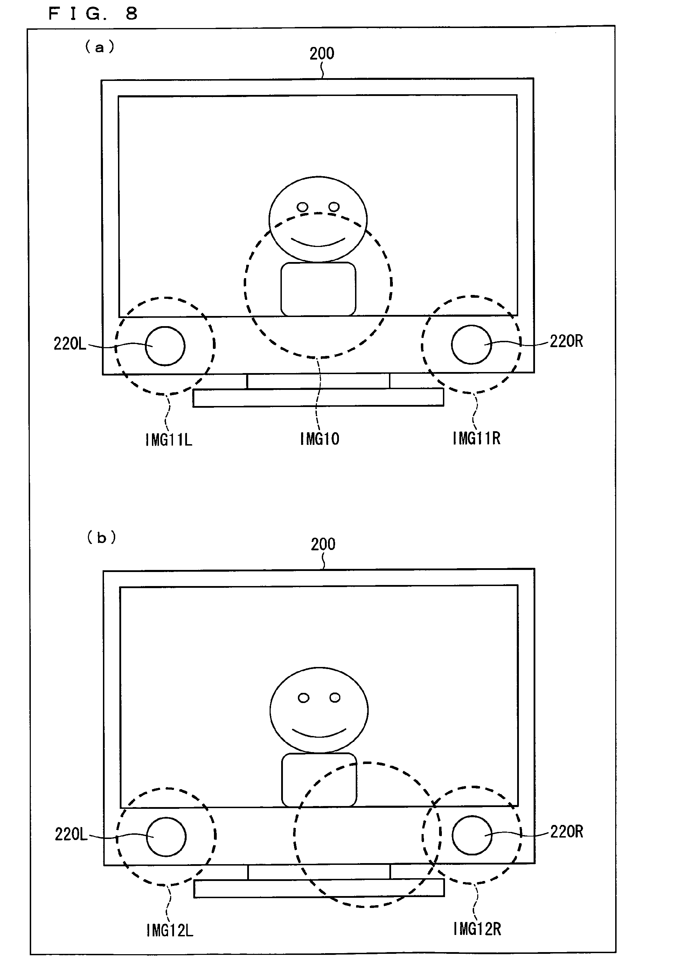

Fig. 8 is a view for the second embodiment which view illustrates positions of sound images to be perceived by a listener.
Fig. 9
Fig. 9 is a view for illustrating a conventional art which view illustrates positions of sound images that a listener perceives due to sound waves emitted from two speakers.
Fig. 10
Fig. 10 is a diagram for showing the conventional art which diagram shows effective bandwidths of an interaural time difference and an interaural level difference.
Fig. 11
Fig. 11 is a graph of a head-related transfer function of the conventional art. In the graph, a change in sound pressure level is plotted for every frequency. The change is obtained by moving a sound source in an elevation direction in a median plane with reference to 0°.
Fig. 12
Fig. 12 is a graph of the conventional art which graph shows an experimental result demonstrating that a listener has an illusion that a sound source of a sound wave whose 8kHz band is enhanced is positioned above an actual sound source. (a) of Fig. 12 shows relative frequencies of test subjects who answered that the sound source was positioned behind the test subjects. (b) of Fig. 12 shows relative frequencies of test subjects who answered that the sound source was positioned above the test subjects. (c) of Fig. 12 shows relative frequencies of test subjects who answered that the sound source was positioned in front of the test subjects.

Reference Signs List

| 100 | Sound signal processing circuit (sound signal processing apparatus) |
|---|---|
| 110L | Equalizer |
| 110R | Equalizer |
| 120 | Filter |
| 121 and 122 | Multiplier |
| 123 and 124 | Adder |
| 125 | Delay device |
| 130 | Switch |
| 141L and 141R | Setting signal input terminal |
| 142 | Setting signal input terminal |
| 200 | TV (display apparatus) |
| 210 | Display panel |
| 220L and 220R | Speaker |

Description of Embodiments

[Embodiment 1]

The following describes one embodiment of a sound signal processing apparatus of the present invention, with reference to figures. Since the sound signal processing apparatus of the present embodiment is realized as a circuit housed in AV equipment, hereinafter, the sound signal processing apparatus is referred to as "sound signal processing circuit," and labeled with a reference sign "100."

The following describes an arrangement of the sound signal processing circuit 100, with reference to Fig. 1.

Fig. 1 is a block diagram illustrating the arrangement of the sound signal processing circuit 100. On the whole, the sound signal processing circuit 100 is a sound signal processing circuit which processes a stereo sound signal received via an input section Lin and a stereo sound signal received via an input section Rin, and outputs the processed stereo sound signals via an output section Lout and an output section Rout. In AV equipment provided with the sound signal processing circuit 100, the sound signal processing circuit 100 processes stereo sound signals associated with a video signal, and outputs the processed stereo sound signals to an exterior or from internal speakers. A sound signal to be processed by the sound signal processing circuit 100 can be an analog sound signal. However, the following assumes that the sound signal to be processed by the sound signal processing circuit 100 is a digital sound signal, particularly, a PCM (Pulse Code Modulation) signal.

As illustrated in Fig. 1, the sound signal processing circuit 100 includes the input section Lin, an equalizer 110L connected with the input section Lin, a filter 120 connected with the equalizer 110L, and the output section Lout connected with the filter 120. An 8kHz band of a sound signal #1L received via the input section Lin is enhanced by the equalizer 110L. A phase of a sound signal #2L which is the sound signal #1L having the 8kHz band enhanced by the equalizer 110L is delayed by the filter 120, and then, the sound signal #2L is outputted from the output section Lout.

As illustrated in Fig. 1, the sound signal processing circuit 100 includes the input section Rin, an equalizer 110R connected with the input section Rin, and the output section Rout connected with the equalizer 110R. An 8kHz band of a sound signal #1R received via the input section Rin is enhanced by the equalizer 110R. A sound signal #2L which is the sound signal #1R having the 8kHz band enhanced by the equalizer 110R is outputted via the output section Rout as it is.

Thus, in the sound signal processing circuit 100, a left channel processing system for processing the sound signal #1L and a right channel processing system for processing the sound signal #1R are independent of each other, and correlation between the sound signals which are equally contained respectively in both channels is decreased by delaying only the signal phase of the left channel.

The following describes the equalizers 110L and 110R in the sound signal processing circuit 100, with reference to Figs. 1 and 2.

The equalizer 110L is means for selectively amplifying the 8kHz band of the sound signal #1L of the left channel. Similarly, the equalizer 110R is means for selectively amplifying the 8kHz band of the sound signal #1R of the right channel. Note that bandwidths to be selectively amplified respectively by the equalizers 110L and 110R is a common bandwidth covering 8kHz, and an upper limit and a lower limit of the bandwidth can be freely specified.

Each of the equalizers 110L and 110R can be realized by, e.g., a parametric equalizer (PEQ), as illustrated in Fig. 1. The parametric equalizer refers to an equalizer capable of varying an amplification characteristic. For the parametric equalizer, a center frequency f, a quality factor Q, and a gain G can usually be set as parameters for defining the amplification characteristic. The quality factor Q is a parameter indicating sharpness of the frequency characteristic at the center frequency f. The quality factor Q is defined by Q=f/(f2-f1) where f1 and f2 (f1<f2) are frequencies attenuated by -3dB with respect to the center frequency f, respectively.

In the present embodiment, a parametric equalizer with the following settings: f=8kHz, Q=1, and G=6dB is used as each of the equalizers 110L and 110R. Fig. 2 is a graph showing the amplification characteristic of the parametric equalizer. As shown in Fig. 2, the parametric equalizer selectively amplifies a frequency component from 1kHz to 11kHz, with a frequency of 8kHz centered.

The equalizers 110L and 110R are not limited to such parametric equalizers but can be another kind of equalizers. For example, instead of amplification-type equalizers for selectively amplifying a frequency component in a specific bandwidth covering 8kHz, attenuation-type equalizers can be employed which are for selectively attenuating a frequency component outside the specific bandwidth. In addition, instead of equalizers capable of varying an amplification characteristic (attenuation characteristic) such as the parametric equalizers, equalizes can be employed which show a fixed amplification characteristic (attenuation characteristic).

The following describes the filter 120 in the sound signal processing circuit 100, with reference to Figs. 1, 3, and 4.

The filter 120 is means for delaying a phase in the 8kHz band of the sound signal #2 processed by the equalizer 110L. The filter 120 can be realized as, e.g., an all-pass filter (APF), as illustrated in Fig. 1. The all-pass filter refers to a filter which does not change an amplitude but does delay a phase.

In the present embodiment, the filter 120 is realized as an all-pass filter illustrated in Fig .3. Fig. 3 is a block diagram illustrating an arrangement example of the all-pass filter. The all-pass filter is a digital filter including two multipliers 121 and 122, two adders 123 and 124, and a delay device 125. For the all-pass filter, a coefficient "a" of the multiplier 121 and a coefficient "-a" of the multiplier 122 as parameters for defining a filter characteristic.

In the arrangement of the digital filter illustrated in Fig. 3, the multiplier 121 multiplies an output value y(n-1) at a time (n-1) by the coefficient "a" so as to supply an obtained product ay(n-1) to the adder 123. The adder 123 adds an input value x(n-1) at the time (n-1) to the product ay(n-1) received from the multiplier 121 so as to supply an obtained sum x(n-1)+ay(n-1) to the delay device 125. The delay device 125 delays, by just one sample time, the sum x(n-1)+ay(n-1) received from the adder 123, in order to supply the sum to the adder 124 at a time "n." The multiplier 122 multiplies an input value x(n) at a time "n" by the coefficient "-a" so as to supply an obtained product -ax(n) to the adder 124. The adder 124 adds the sum x(n-1)+ay(n-1) obtained from the delay device 125 to the product -ax(n) obtained from the multiplier 122, thereby obtaining an output value at the time "n": y(n)=-ax(n)+x(n-1)+ay(n-1).

(a) of Fig. 4 is a graph showing a frequency characteristic of a gain of the all-pass filter illustrated in Fig. 3. As shown in (a) of Fig. 4, the all-pass filter maintains an amplitude of the sound signal #1L constant across the audible bandwidth. Therefore, in a case where a level of the sound signal #1L is equal to a level of the sound signal #1R, a level of the sound signal #3L is equal to a level of the sound signal #2R. As a result, a sound image is not moved due to an interaural sound pressure level difference.

(b) of Fig. 4 is a graph showing a frequency characteristic of a phase delay amount of the all-pass filter illustrated in Fig. 3. As shown in (b) of Fig. 4, after peaking at 180° corresponding to 20kHz, the phase delay amount of the all-pass filter is monotonously reduced while a frequency is reduced. Therefore, in the 8kHz band, it is possible to obtain a sufficient phase delay amount for diffusing a sound image. In addition, it is possible to suppress a phase delay amount small in a bandwidth in which an interaural time difference affects perception of a sound image (i.e., in a bandwidth not higher than 1.6kHz). For example, with a setting of a=0.5, a phase delay amount of approximately 120° can be obtained at 8kHz. On the other hand, it is possible to suppress a phase delay amount at 1kHz to approximately 20°.

The filter 120 is not limited to the all-pass filter having the arrangement illustrated in Fig. 3 but can be one having a different arrangement. That is, the filter 120 can be, e.g., a biquad filter (bilinear filter). The filter 120 does not have to be an all-pass filter of a strict sense. That is, the filter 120 does not have to be a filter which does not change an amplitude at all across the bandwidth. In other words, the filter 120 can be a filter which changes an amplitude to the extent that sound image localization is not affected.

Although according to Fig. 1, the filter 120 is provided so as to follow the equalizer 110L, alternatively, the filter 120 can be provided so as to be followed by the equalizer 110L. That is, the sound signal processing circuit 100 can be arranged such that the filter 120 first delays a phase of an input sound signal of the left channel, and then, the equalizer enhances an 8kHz band of the input sound signal.

The following describes two modification examples of the sound signal processing circuit 100.

Fig. 5 is a block diagram illustrating a first modification example of the sound signal processing circuit 100.

A sound signal processing circuit 100 illustrated in Fig. 5 is similar to the sound signal processing circuit 100 illustrated in Fig. 1, except that a switch 130 for disabling a function of moving a sound image upward is added. The switch 130 includes input terminals 131L and 131R, bypass terminals 132L and 132R, and a control signal input terminal 133.

In a case where an enable signal for enabling the function of moving a sound image upward is received via the control signal input terminal 133, the switch 130 connects the input terminal 131L with the input section Lin so that a sound signal #1L received via the input terminal 131L may be supplied to the equalizer 110L. Simultaneously, the switch 130 connects the input terminal 131R with the input section Rin so that a sound signal #1L received via the input terminal 131R may be supplied to the equalizer 110R.

In a case where a disable signal for disabling the function of moving a sound image upward is received via the control signal input terminal 133, the switch 130 connects the input terminal 131L with the bypass terminal 132L so that the sound signal #1 received via the input terminal 131L may be outputted outside the sound signal processing circuit 100 as it is. Simultaneously, the switch 130 connects the input terminal 131R with the bypass terminal 132R so that the sound signal #1R received via the input terminal 131R may be outputted outside the sound signal processing circuit 100 as it is. Thus, the function of moving a sound image upward of the sound signal processing circuit 100 is disabled.

Fig. 6 is a block diagram illustrating a second modification example of the sound signal processing circuit 100.

A sound signal processing circuit 100 illustrated in Fig. 6 is similar to the sound signal processing circuit 100 illustrated in Fig. 5, except that the sound signal processing circuit 100 illustrated in Fig. 6 is additionally provided with (i) setting signal input terminals 141L and 141R for setting respective amplification characteristics of the equalizers 110L and 110R, and (ii) a setting signal input terminal 142 for setting a filter characteristic of the filter 120.

As described above, the equalizers 110R and 110L can be realized by parametric equalizers for each of which a center frequency f, a quality factor Q, and a gain G can be set as parameters for defining an amplification characteristic. The setting signal input terminal 141L is an input terminal for inputting a setting signal for setting the parameters of the equalizer 110L. The setting signal input terminal 141R is an input terminal for inputting a setting signal for setting the parameters of the equalizer 110R.

As described above, the filter 120 can be an all-pass filter for which a parameter "a" (coefficient of the multiplier 121) which defines a filter characteristic can be set. The setting signal input terminal 142 is an input terminal for inputting a setting signal for setting the parameter "a" of the filter 120.

According to the arrangement illustrated in Fig. 6, an apparatus having the sound signal processing circuit 100 can not only disable the function of moving a sound image upward of the sound signal processing circuit 100 but also properly adjust respective amplification characteristics of the equalizers 110R and 110L and a filter characteristic of the filter 120. Thus, the apparatus can control the function of moving a sound image upward of the sound signal processing circuit 100.

As described above, the sound signal processing apparatus (sound signal processing circuit 100) of the present embodiment includes: a first equalizer for enhancing a bandwidth covering a frequency of 8kHz of the first sound signal; a second equalizer for enhancing a bandwidth covering the frequency of 8kHz of the second sound signal; and a filter for delaying a phase of the first sound signal outputted from the first equalizer, or a phase of the first sound signal to be inputted in the first equalizer.

In other words, the sound signal processing apparatus (sound signal processing circuit 100) of the present embodiment outputs (i) the first sound signal whose bandwidth covering 8kHz is enhanced and whose phase is delayed and (ii) the second sound signal whose bandwidth covering 8kHz is enhanced and whose phase is not delayed.

This makes it possible to obtain a sufficient distance of upward movement of a sound image. In addition, this eliminates (i) sound quality deterioration such as a change in tone due to addition or subtraction between the first sound signal and the second sound signal, and (ii) that disruption of sound image localization which is due to right-and-left movement of a listener. Furthermore, this prevents a sound image from localizing outside a range between two right and left speakers provided under a display panel in a case where the sound signal processing apparatus is applied to a TV of the under-speaker type or a TV rack housing speakers.

[Embodiment 2]

The following describes one embodiment of a display apparatus of the present invention, with reference to figures. Since the display apparatus of the present embodiment is realized as a television receiver, hereinafter, the display apparatus is referred to as "TV" and labeled a reference sign "200."

Fig. 7 is an elevation view of a TV 200. As illustrated in Fig. 7, the TV 200 includes a display panel 210 and speakers 220L and 220R. In addition, the TV 200 houses the sound signal processing circuit 100 illustrated in Fig. 1 although this is not illustrated.

As illustrated in Fig. 7, the TV 200 is a TV of the under-speaker type. That is, the speakers 220L and 220R are provided under the display panel 210 (on a floor side in a proper installed state). The TV 200 outputs, from the speakers 220L and 220R, stereo sound associated with a video image to be displayed on the display panel 210.

The TV 200 is arranged such that stereo sound signals received via a tuner (or those received via an audio input terminal) are processed by the sound signal processing circuit 100, and the stereo sound signals thus processed are supplied to the speakers 220L and 220R. Needless to say, an amplifier etc. can be provided between the sound signal processing circuit 100 and the speakers 220L and 220R.

In a case where sound signals of a right channel and a left channel contain common monaural sound, a sound image of the monaural sound is localized at a midpoint between the speakers 220L and 220R, thereby forming a phantom center. In addition, a viewer is likely to feel that the sound image of the monaural sound is localized above the midpoint between the speakers 220L and 220R because the sound signals to be supplied to the speakers 220L and 220R are those having 8kHz bands enhanced by the sound signal processing circuit 100.

Furthermore, a phase of the sound signal of the left channel is delayed by the sound signal processing circuit 100. Therefore, correlation between left monaural sound to be outputted from the speaker 220L and right monaural sound to be outputted from the speaker 220R is smaller than 1. Accordingly, the sound image of the monaural sound is expanded. As a result, the viewer perceives that the sound image of the monaural sound is positioned so as to overlap the display panel 210, as illustrated as IMG10 in (a) of Fig. 8.

The left monaural sound contained only in the sound signal of the left channel is outputted only from the left speaker 220L. Accordingly, the sound image of the left monaural sound is localized in the vicinity of the speaker 220L, as illustrated as IMG11L in (a) of Fig. 8. The right monaural sound contained only in the sound signal of the right channel is outputted only from the right speaker 220R. Accordingly, the sound image of the right monaural sound is localized in the vicinity of the speaker 220R, as illustrated as IMG11R in (a) of Fig. 8. That is, unlike the case of a pseudo surround technique, there is no possibility of a positional mismatch between the sound image and a video image due to excess expansion of the sound images IMG11L and IMG11R toward both sides of the display panel 210 respectively.

Even if the viewer moves to the right (or to the left) from one vertex of an isosceles triangle whose base angles are formed at the positions of the speakers 220L and 220R, the sound image of the left monaural sound contained only in the sound signal of the left channel is still localized in the vicinity of the left speaker 220L, as illustrated as IMG12L in (b) of Fig. 8. Similarly, the sound image of the right monaural sound contained only in the sound signal of the right channel is still localized in the vicinity of the right speaker 220R, as illustrated as IMG12R in (b) of Fig. 8. Therefore, unlike the case of the pseudo surround technique, there is no possibility that the viewer feels unnaturalness due to a positional shift of the sound images IMG12L and IMG12R to the vicinity of the right speaker 220L (or the left speaker 220R).

According to the present embodiment, the TV 200 houses the speakers 220L and 220R for outputting stereo sound signals processed by the sound signal processing circuit 100. However, the TV 200 does not necessarily house the speakers 220L and 220R. That is, the TV 200 can have output terminals for outputting the stereo sound signals processed by the sound signal processing circuit 100, in order to supply, to an external amplifier or external speakers, the stereo sound signals outputted via the output terminals.

In the above, the present embodiment deals with a TV as one example of AV equipment using the sound signal processing circuit 100. However, such AV equipment is not limited to a TV. For example, the sound signal processing circuit 100 is also applicable to a rack for placing a TV (display apparatus), particularly, a rack housing a pair of speakers for outputting stereo sound associated with a video image to be displayed on the TV (such rack is referred to as "theater rack system," "rack style audio system,", or the like). Speakers housed in such a rack are consequently positioned below a TV. Therefore, in this case too, it is possible to obtain the same effect as that obtained in the case of the TV of the under-speaker type in a case where the sound signal processing circuit 100 is housed in such a rack, and stereo sound signals processed by the sound signal processing circuit 100 are outputted from the speakers housed in the rack.

[Additional Remarks]

The sound signal processing circuit 100 can be realized by a digital signal processor. That is, the sound signal processing circuit 100 can be realized as a digital signal processor including: an arithmetic unit such as a high-speed product-sum arithmetic unit and an ALU (Arithmetic Logical Unit); and a memory device such as a program memory storing a sound signal processing program for causing the arithmetic unit to function as the equalizers 110L and 110R, and the filter 120.

The object of the present invention can be achieved, not only in a case where the sound signal processing program is stored in the program memory in the digital signal processor in a fixed manner, but also in a case where program code (executable program, intermediate code program, or source program) of the sound signal processing program is supplied to a general-purpose digital signal processor so that the digital signal processor may execute the program code, or a storage medium storing the program code is supplied to AV equipment so that a general-purpose digital signal processor provided in the AV equipment may read out and execute the program code.

The storage medium may be, for example, a tape, such as a magnetic tape or a cassette tape; a magnetic disk, such as a floppy® disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The digital signal processor (or the AV equipment including the digital signal processor) may be arranged to be connectable to a communications network so that the program code may be delivered to the digital signal processor over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth®, 802.11 wireless, HDR, mobile telephone network, satellite line, or terrestrial digital network. The present invention can also be realized by the program code in the form of a computer data signal embedded in a carrier wave which is embodied by electronic transmission.

The present invention is not limited to the description of the embodiments above, but may be altered by a skilled person within the scope of the claims. An embodiment based on a proper combination of technical means disclosed in different embodiments is encompassed in the technical scope of the present invention.

That is, the embodiment and concrete examples of implementation discussed in the foregoing detailed explanation serve solely to illustrate the technical details of the present invention, which should not be narrowly interpreted within the limits of such embodiment and concrete examples, but rather may be applied in many variations within the spirit of the present invention, provided such variations do not exceed the scope of the patent claims set forth below.

Industrial Applicability

The present invention is widely applicable to various types of AV equipment which process stereo sound signals. Especially, the present invention is particularly suitably applicable to a TV of the under-speaker type and a TV rack housing a speaker system.

**Claims**

1. A sound signal processing apparatus for processing a stereo sound signal containing a first sound signal and a second sound signal,
   the sound signal processing apparatus comprising:

   a first equalizer for enhancing a bandwidth covering a frequency of 8kHz of the first sound signal;
   a second equalizer for enhancing a bandwidth covering the frequency of 8kHz of the second sound signal; and
   a filter for delaying a phase of the first sound signal outputted from the first equalizer, or a phase of the first sound signal to be inputted in the first equalizer.

2. The sound signal processing apparatus as set forth in claim 1,
   wherein the filter maintains an amplitude of the first sound signal across an audible bandwidth.

3. The sound signal processing apparatus as set forth in claim 1 or 2,
   wherein the filter has a frequency characteristic such that a phase delay amount shows a monotonous reduction against a frequency reduction.

4. A sound signal processing apparatus for processing a stereo sound signal containing a first sound signal and a second sound signal,
   the sound signal processing apparatus outputting the stereo sound signal containing the first sound signal and the second sound signal, the first sound signal having (i) an enhanced bandwidth covering 8kHz and (ii) a delayed phase, the second sound signal having (a) an enhanced bandwidth covering 8kHz and (b) a phase which is not delayed.

5. A sound signal processing method for processing a stereo sound signal containing a first sound signal and a second sound signal,
   the sound signal processing method comprising:

   a first equalizing step of enhancing a bandwidth covering 8kHz of the first sound signal;
   a second equalizing step of enhancing a bandwidth covering 8kHz of the second sound signal; and
   a filtering step of delaying a phase of the first sound signal processed in the first equalizing step, or a phase of the first sound signal to be processed in the first equalizing step.

6. A display apparatus having a display panel for displaying a video image, and a pair of speakers provided under the display panel, the pair of speakers for outputting stereo sound associated with the video image,
   the display apparatus comprising a sound signal processing apparatus recited in any one of claims 1 through 4,
   the display apparatus supplying, to the pair of speakers, the stereo sound signal processed by the sound signal processing apparatus.

**7.** A rack for placing a display apparatus for displaying a video image, the rack having a pair of speakers for outputting stereo sound associated with the video image,
the rack comprising a sound signal processing apparatus recited in any one of claims 1 through 4,
the rack supplying, to the pair of speakers, the stereo sound signal processed by the sound signal processing apparatus.

**8.** A program for causing a digital signal processor to operate as a sound signal processing apparatus recited in any one of claims 1 through 3,
the program causing the digital signal processor to operate as the equalizers and the filter of the sound signal processing apparatus.

**9.** A storage medium which is readable by a digital signal processor, the storage medium storing a program recited in claim 8.

F I G. 1

F I G. 2

FIG. 3

FIG. 4

(a)

(b)

FIG. 5

FIG. 6

FIG. 7

F I G. 8

(a)

(b)

FIG. 9

FIG. 10

| INTERAURAL SOUND PRESSURE LEVEL DIFFERENCE |
|---|

| INTERAURAL TIME DIFFERENCE OF CARRIER WAVE |
|---|

INTERAURAL TIME DIFFERENCE OF ENVELOPE CURVE

20    50    100    200    500Hz    1    2    5    10    20kHz

1. 6kHz

FREQUENCY

FIG. 11

F I G. 1 2

(a)

(b)

(c)

## INTERNATIONAL SEARCH REPORT

| | International application No. |
|---|---|
| | PCT/JP2008/072913 |

A.  CLASSIFICATION OF SUBJECT MATTER
*H04S1/00*(2006.01)i, *H04N5/60*(2006.01)i, *H04R5/02*(2006.01)i

According to International Patent Classification (IPC) or to both national classification and IPC

B.  FIELDS SEARCHED

Minimum documentation searched (classification system followed by classification symbols)
H04S1/00, H04N5/60, H04R5/02

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2001-359199 A  (Matsushita Electric Industrial Co., Ltd.), 26 December, 2001 (26.12.01), All pages; all drawings (Family: none) | 1-9 |
| Y | JP 57-129099 A  (Sony Corp.), 10 August, 1982 (10.08.82), Page 2, lower right column, line 7 to page 3, lower left column, line 9 (Family: none) | 1-9 |

☒  Further documents are listed in the continuation of Box C.          ☐  See patent family annex.

*     Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search   23 March, 2009 (23.03.09) | Date of mailing of the international search report   07 April, 2009 (07.04.09) |
|---|---|
| Name and mailing address of the ISA/   Japanese Patent Office | Authorized officer |
| Facsimile No. | Telephone No. |

Form PCT/ISA/210 (second sheet) (April 2007)

<div align="center">**INTERNATIONAL SEARCH REPORT**</div>

| International application No. |
|---|
| PCT/JP2008/072913 |

**C (Continuation). DOCUMENTS CONSIDERED TO BE RELEVANT**

| Category* | Citation of document, with indication, where appropriate, of the relevant passages | Relevant to claim No. |
|---|---|---|
| Y | CD-ROM of the specification and drawings annexed to the request of Japanese Utility Model Application No. 90470/1991(Laid-open No. 43700/1993) (Fujitsu Ten Ltd.), 11 June, 1993 (11.06.93), Par. Nos. [0026], [0027] (Family: none) | 1-9 |
| A | JP 2-296499 A (Matsushita Electric Industrial Co., Ltd.), 07 December, 1990 (07.12.90), Page 1, lower right column, line 1 to page 2, upper left column, line 18 (Family: none) | 1-9 |
| A | JP 3-157100 A (Matsushita Electric Industrial Co., Ltd.), 05 July, 1991 (05.07.91), Page 1, lower right column, line 5 to page 2, lower right column, line 7 (Family: none) | 1-9 |
| A | JP 2004-48168 A (Pioneer Corp.), 12 February, 2004 (12.02.04), Par. Nos. [0025] to [0053]; Figs. 4 to 9 & US 2004/0025755 A1 & CN 1472985 A | 1-9 |
| A | JP 2005-311988 A (Onkyo Corp.), 04 November, 2005 (04.11.05), Par. No. [0017]; Fig. 1 & US 2005/0238196 A1 | 1-9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002010400 A
- JP 2006042316 A

**Non-patent literature cited in the description**

- **Jens Blauert.** Spatial Acoustics. Kagoshima Institute Publishing Co., Ltd, 10 July 1986
- **Kenichi KIDO.** Introduction to Digital Signal Processing. Maruzen Co., Ltd, 20 July 1985